# EUROPEAN PATENT SPECIFICATION

(11) **EP 1 753 560 B1**
(45) Date of publication and mention of the grant of the patent: **21.01.2009**
(21) Application number: 05734558.9
(22) Date of filing: 19.04.2005
(51) Int. Cl.: B22C 1/22

(54) **RECLAMATION OF ESTER-CURED PHENOLIC RESIN BONDED FOUNDRY SANDS**
AUFARBEITUNG VON ESTERGEHÄRTETEN UND MIT PHENOLHARZ GEBUNDENEN GIESSEREIALTSANDEN
VALORISATION DE SABLES DE FONDERIE LIES AU MOYEN D'UN LIANT A BASE DE RESINE PHENOLIQUE TRAITEE PAR UN ESTER

(30) Priority: 11.05.2004 GB 0410484
(43) Date of publication of application: 21.02.2007
(73) Proprietor: Ashland Licensing and Intellectual Property LLC, Dublin, OH 43017 (US)
(72) Inventor: BUSBY, Andrew, David, Kidderminster, Worcs. DY10 3AP (GB)
(74) Representative: Bowman, Paul Alan
(86) International application number: PCT/GB2005/001482
(87) International publication number: WO 2005/107975

(56) References cited:
- US-A- 5 299 618
- US-A- 5 567 743
- US-A- 6 015 846

## Description

This invention relates to the reclamation of foundry sands from used foundry moulds which have been fabricated by bonding foundry sand with phenolic resin binder in alkaline aqueous solution cured with an organic ester.

There is an increasing demand to recycle foundry sands from moulds after casting. The demand is fuelled not only by the cost of virgin sand but also by the problems associated with the disposal of the used resin coated sand. In the past such material was readily disposed of in land fill sites but recently the authorities have become more environmentally conscious and in many regions there are strict regulations governing the disposal of such materials.

One known method of sand reclamation comprises attrition of the bonded sand to break up the agglomerates into individual particles. Whilst the attrition process may remove some resin from the sand particles by abrasion which will be removed with the fines, resin remains on the surface of sand particles and the rebonding properties of the attrition reclaimed sand are inferior to the bonding properties of new sand. Generally, conventional attrition techniques allow re-use of up to 85% of the resin bonded sand, the remaining sand being dumped.

Known thermal techniques for reclaiming foundry sand after attrition comprise heating the sand in a fluidised bed to a sufficiently high temperature to remove the organic resin effectively and to ensure low emissions form the exhaust gas. However, it has been found that such a thermal reclamation process is not particularly successful with ester-cured bonded foundry sands because there is a tendency for the sand grains to agglomerate in the thermal reclaimer preventing efficient operation of the fluidised bed at temperatures high enough to remove the binder effectively and ensure low emissions. At low temperatures there is inefficient removal of the resin. Sand reclaimed by the known thermal techniques exhibits re-bonding properties inferior to new sand and comparable to sand reclaimed by attrition.

It is believed the problem of agglomeration in the thermal reclamation system is due to the presence of potassium in the resin binder system which is generally in the form of potassium hydroxide and associated ester salts. It is postulated that the potassium compounds decompose and/or melt during the thermal treatment which results in agglomeration of sand particles, the particles being bonded or attracted to each other to such an extent that the fluidising gas is unable to maintain an effective fluidised bed.

The potassium compounds could be removed by washing the foundry sand prior to thermal treatment. However, such washing would significantly increase the energy requirements to dry and thermally treat the washed sand that such a procedure would be uneconomic.

WO94/05448 disclose a process comprising the thermal treatment of attrition reclaimed ester-cured phenolic resin bonded sand in which prior to the thermal treatment the attrition reclaimed sand is contacted with an additive which converts potassium compounds to a form having a melting point of at least 600°C and the thermal treatment is effected at a temperature below that at which the resulting potassium compound fuses.

It has been found that by converting the potassium hydroxide and other salts in the ester-cured resin system to a potassium compound having a melting point above 550°C, and preferably above 700°C, the sand can be thermally processed at sufficiently high temperatures to remove the resin coating effectively and ensure low emissions but without agglomeration of the sand. Furthermore, there is a significant reduction in the potassium content of the coated sand after the thermal treatment and the resulting sand exhibits rebonding properties superior to attrition reclaimed sand and often comparable to new sand. The process also allows recycling of more sand than with conventional techniques.

There are a number of potassium compounds having a melting point above 550°C including the antimonide (812°C), metaborate (947°C), chloride (776°C), chromate (975°C), fluoride (880°C), iodide (723°C), molybdate (919°C), orthophosphate (1340°C), metaphosphate (807°C), silicate (976°C) and sulphate (1069°C), bromide (730°C) and carbonate (891°C).

According to a preferred embodiment the additive is in the form of an aqueous solution of a compound which will react with potassium hydroxide to yield such a potassium compound. Suitable acid or salt solutions for use as an additive include halogen acids, e.g. HCl, HBr, HI, sulphuric acid, boric acid, and ammonium salts of such acids such as, ammonium chloride.

This process is effective but has the disadvantages of high corrosion of stainless steel components in the thermal plant and difficulties with very fine dust formation.

WO94/26439 discloses a particulate refractory composition for use in the manufacture of foundry moulds and cores which comprises a mixture of a particulate refractory aggregate containing elutable alkali with, as an additive thereto, a particulate active clay having a particle size of less than 0.5mm.

The use of the particulate active clay additive in the composition is said to have the effect of improving the strengths of foundry moulds and cores that are produced using the composition compared to the case where no particulate active clay additive is incorporated into the particulate refractory.

The particulate clay, which may be a thermally-treated clay, reacts with alkali metal salts which are present on the surface of the refractory surface so that the alkali metal ions are unable to affect, in any substantial way, the subsequent reaction of binder systems used, in the production of foundry moulds and cores, to bind the particulate refractory together.

Examples of suitable particulate clays include kaolin's, thermally-treated kaolin's, smectites, montmorillonites, bentonites, vermiculites, attapulgites, serpentines, glauconites, illites, allophane and imogolite. Of these materials, kaolin and thermally-treated kaolin are preferred.

This process suffers from the disadvantage that very fine clay particles are retained with the treated sand with a resultant lack of potassium (or other alkali) removal. The sand refractoriness and re-bond strength are deleteriously affected.

US 6286580 discloses a process for thermally reclaiming sand which has been used to make foundry moulds or cores and which has been bonded using an alkaline resol phenol-formaldehyde resin, comprising the sequential steps of:
(a) subjecting lumps of the used and bonded sand to attrition in order to break up the lumps into individual sand grains
(b) adding a carbohydrate to the sand grains in an amount of 0.25% to 5.0% by weight based on the weight of the used sand, and
(c) subjecting the sand to thermal treatment in a thermal reclamation apparatus, such that the carbohydrate is removed from the sand by combustion.

The carbohydrate is preferably a water soluble carbohydrate because it is preferred to add the carbohydrate to the sand as a solution in order to disperse the carbohydrate thoroughly in the sand mass. The carbohydrate may be for example a monosaccharide such as glucose, mannose, galactose or fructose or a disaccharide such as sucrose, maltose or lactose. The carbohydrate may also be a derivative such as a polyhydric alcohol. Examples of suitable polyhydric alcohols include ethylene glycol, which can be considered to be a derivative of the simplest monosaccharide glycolaldehyde (CH₂OH.CHO), glycerol, which is a derivative of the monosaccharide glyceraldehydes (CH₂OH.CHOH.CHO) pentaerythritol, which is a derivative of an aldotetrose, pentahydric alcoyls such as xylitol, which is a derivative of the aldopentose xylose, and hexahydric alcohols such as mannitol, which is a derivative of the aldohexose mannose, or sorbitol, which is a derivative of either of the aldohexoses glucose and gulose. The carbohydrate may also be a derivative such as a sugar acid, for example gluconic acid. Polysaccharides or their derivatives may also be used. Examples of a suitable polysaccharide derivative are starch hydrolysates, i.e. glucose syrups or dextrins. However some polysaccharides and polysaccharide derivatives, for example starch, cellulose ethers and sodium carboxymethylcellulose are less desirable as they are not readily water soluble and can cause an increase in viscosity of the water, thus making them more difficult to disperse in the sand. An impure carbohydrate material such as molasses may also be used.

The carbohydrate additive prevents sand grain fusion and this is particularly advantageous when the thermal treatment is done in a fluidised bed unit. Since the additive is organic it completely combusts during the thermal treatment process and leaves no undesirable residues which could affect rebonding properties when the reclaimed sand is reused. The preferred carbohydrate additives are water soluble so they can readily be dispersed in the sand as an aqueous solution.

This process is known to work as the carbohydrate prevents the fritting of the sand and permits the low melting alkali compounds to react with the amorphous silica on the surface of the sand grain. By the time the carbohydrates have been burnt in the thermal process the potassium compounds have reacted with the sand and no low melting compounds remain. However, this method proved unsuccessful as the potassium removal is virtually zero and the potassium content of the reclaimed sand became too high with intensive re-use. Re-bond strengths and refractoriness are compromised.

It has now been found that pozzolanic additives may be used in the reclamation of foundry sand.

According to the present invention there is provided a method of preparing a particulate refractory composition for use in the manufacture of foundry moulds and cores from spent foundry moulds or cores formed of refractory material and an ester-cured phenolic resin binder, the method comprising the steps of breaking up the spent foundry moulds or cores, mixing the resulting broken material with a particulate pozzolan additive and subjecting the mixture to a heat treatment at a temperature in the range 450 to 900°C.

Pozzolanic additives suitable for use in the invention include natural pozzolans occurring in volcanic ash and in volcanic tuff and synthetic pozzolans, such as, pulverised fuel ash, fly ash, ground granulated blast-furnace slag, condensed silica fume, amorphous silica and calcined bauxite.

A common characteristic of the pozzolanic additives is their content of reactive SiO₂. In the past the reactive SiO₂ has been used to produce cementaceous material, which is the basis of Roman concrete, by reaction with calcium hydroxide at ambient temperature to produce hydrated calcium silicates. However, the pozzolan additives are also able to react with other alkali and alkali earth hydroxides and compounds. Mostly the reactivity of these pozzolanic additives is relatively slow at ambient temperature but when heated to typical thermal reclamation temperatures 450 to 900°C the reaction is quite rapid. The pozzolanic additive reacts with the alkaline residues in reclaimed sand faster than the sand itself such that the reactive portion of the residual alkali material has reacted with the pozzolanic additive and not the surface of the sand. This reaction then prevents the potassium compounds residual on the sand surface from forming low melting compounds (potassium oxide for example) and from reacting with or diffusing in to the amorphous silica structure present on the surface of some silica sand grains.

The pozzolanic additive is used in particulate form. Generally the particle size of the additive is up to 0.5mm. While very fine material works just as well as coarser material it is more difficult to handle and preferably most of the particles have a size greater than 45µm.

The pozzolanic additive is mixed with the broken particulate from the spent foundry moulds and cores. The additive may be introduced as a solid but is conveniently introduced as a suspension in water e.g. as a slurry having a solids content of 20 to 50% by weight, preferably about 40% by weight. Conventional suspending aids may be used to facilitate suspension of the particles. The pozzolanic additive is generally added in an amount of from 0.1 to 3% by weight based on the weight of solids, preferably from 0.3 to 1.3% by weight based on the weight of solids. Typically, the pozzolanic additive is added as a slurry, mixed with the granular recovered sand in a conventional foundry screw type continuous mixer positioned to discharge directly into a thermal reclamation plant.

The thermal processing is conducted at a temperature in the range 400 to 900°C, preferably 450 to 750°C, generally for a time period of from 20 minutes to 12 hours, preferably 30 minutes to 2 hours. A preferred thermal treatment unit is a fluidised bed although other thermal treatment units may be used. Fluidised bed units are prone to sand sintering (fritting) due to the melting of potassium compounds and this disadvantage is substantially reduced by the use of the pozzolanic additive.

The process generally includes a step to remove dust and/or fines during and/or after the heat treatment. The removal of fines will remove both sand fines and pozzolanic additive and reaction products thereof. It is desirable to remove any residual additive since this will have a negative effect on the re-bond strength. It has been observed that removal of residual pozzolanic additive e.g. pulverised fuel ash, with fines removal is easier than the removal of clay additives as there is less static attraction created during thermal processing.

The invention has the advantages that suitable pozzolanic additives are relatively cheap since they are derived from waste material and are commercially available in a suitable size grading. A preferred material is pulverised fuel ash in accordance with BS3892 Part 1. Experimental work has shown that the potassium removal rate from sand using the process of the invention is better than for clay additives. Although the potassium removal is lower than that obtained using acids and acid salt additives it does not suffer from the processing disadvantages of that process and permits sand processing without sand fritting or sintering.

The treated sand resulting from the process of the invention may be used to prepare foundry moulds and cores by mixing with a suitable liquid curable binder, preferably an ester-curable phenolic resin. The binder is naturally used in an amount of from 0.5 to 5% by weight based on the particulate refractory composition. The resulting composition is formed into the desired pattern or shape and cured. An ester curing agent may be introduced into the mixture in liquid or solid form or the formed composition may be passed with a gaseous ester to bring about cure of the binder. A preferred binder system comprises NOVASET® 730 phenolic resin and NOVASET® NH Medium Hardener (Ethylene glycol diacatate) commercially available from Ashland UK Limited.

The invention will be illustrated by the following Example.

### Example

Tests were carried out on a laboratory scale using an electrically heated fluidised bed at a processing temperature of 600°C. 10kg of an attrition reclaimed sand from a commercial foundry was processed in the thermal fluidised bed furnace for a period of about 2 hours until a temperature of 600°C had been achieved and held for 20 minutes. The thermally reclaimed sand was then cooled sieved through a 1mm mesh and de-dusted by a simple agitation/extraction method. It is considered that this dust removal would remove the majority of dust not adhering to the sand. The treated sand was then mixed with new sand in a ratio of 95:5 and then mixed with 0.8% NOVASET® 730 resin and 25% of NH Medium hardener. The re-bonded sand was allowed to harden and then broken down to approximate grain size and reclaimed again in the electrically heated fluidised bed. This procedure was repeated up to 10 times.

The sand resulting from these procedures was also tested by ramming tensile strength test pieces from the prepared mixtures. The mixture, in each case, was formed into several tensile test pieces (known as "dog bones") and allowed to cure. Tensile strength measurements were made by loading the samples with a a Nene tensometer and measuring the load when the samples broke in to two pieces. Samples were tested after 1 hour and 4 hours from the end of mixing.

Three additives were compared using the procedure described:
1. Pulverised fuel ash (PFA) in accordance with BS3892 Part 1 added as 40% solids slurry in an amount of 1.5% by weight of sand.
2. A thermally treated kaolinite clay slurry prepared as per the teachings in WO94/26439 patent. The slurry was prepared as 30% solids and added at 1.5% by weight of sand.

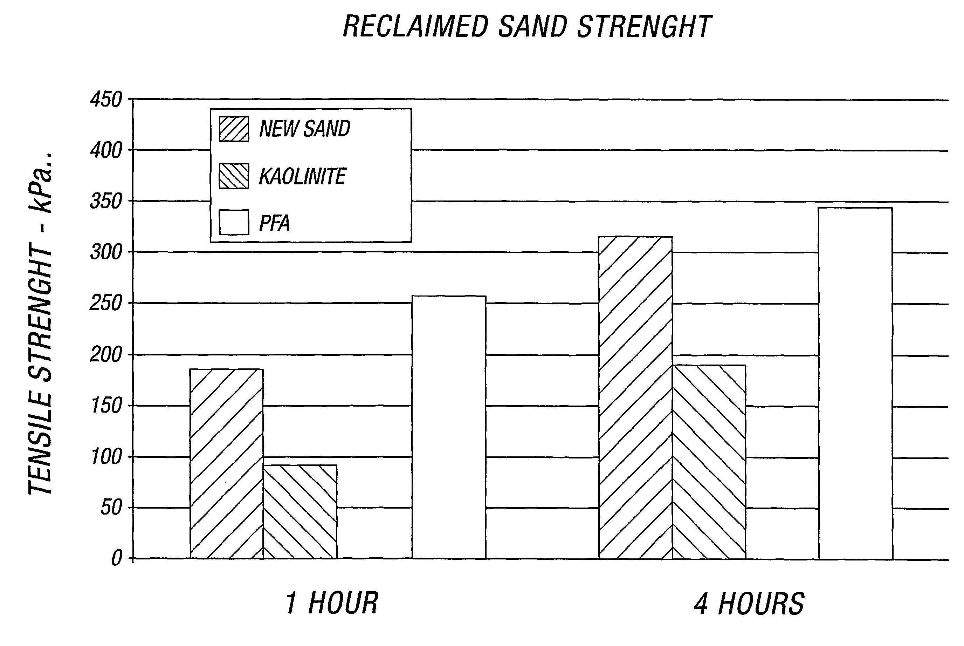

The results ware reported in the following Table and the accompanying Figure which represents a plot of reclaimed sand strength at 1 hour and 4 hours after moulding.

**Table**

| Additive | Reclaimed Sand Strengths | |
|---|---|---|
| | 1 hour (kPa) | 4 hours (kPa) |
| New sand | 186 | 316 |
| PFA after 6 recycles | 256 | 344 |
| Kaolinite 4 recycles | 48 | 98 |
| Kaolinite 6 recycles | no strength | no strength |

These results indicate that the PFA of the invention produces superior results to the clay additive, particularly where dust removal is not efficient.

## Claims

1. A method of preparing a particulate refractory composition for use in the manufacture of foundry moulds and cores from spent foundry moulds or cores formed of refractory material and an ester-cured phenolic resin binder, the method comprising the steps of breaking up the spent foundry moulds or cores, mixing the resulting broken material with a particulate pozzolan additive and subjecting the mixture to a heat treatment at a temperature in the range 450 to 900°C.

2. A method as claimed in Claim 1 in which the pozzolanic additive is selected from volcanic ash, pulverised fuel ash, fly ash, ground granulated blast-furnace slag, condensed silica fume, amorphous silica and calcined bauxite.

3. A method as claimed in Claim 1 in which the pozzolanic additive is pulverised fuel ash.

4. A method as claimed in any preceding claim in which the pozzolanic additive has a particle size substantially less than 0.5mm.

5. A method as claimed in any preceding claim in which the pozzolanic additive is present in an amount of from 0.1 to 3% by weight based on the weight of solids.

6. A method as claimed in Claim 5 in which the pozzolanic additive is present in an amount of from 0.3 to 1.3% by weight based on the weight of solids.

7. A method as claimed in any preceding claim in which the pozzolanic additive is added to the spent foundry sand as a slurry with water.

8. A method as claimed in Claim 7 in which the slurry has a solids content of from 20 to 50% by weight.

9. A method as claimed in any preceding claim in which the heat treatment is at a temperature in the range 450 to 750°C.

10. A method as claimed in any preceding claim in which the mixture is subjected to heat treatment for a period of from 20 minutes to 12 hours.

11. A method as claimed in claim 10 in which the mixture is subjected to heat treatment for a period of from 30 minutes to 2 hours.

12. A method as claimed in any preceding claim in which the heat treatment is effected in a fluidised bed.

13. A method as claimed in any preceding claim which additionally comprises the step of removing dust and/or fines during and/or after the heat treatment.

## Patentansprüche

1. Verfahren zum Herstellen einer partikulären feuerfesten Zusammensetzung zur Verwendung in der Herstellung von Gießereiformen und Gießereikernen aus verbrauchten Gießereiformen oder Gießereikernen, die aus Feuerfestmaterial und mit Ester gehärtetem Phenolharz-Bindemittel erzeugt sind; wobei das Verfahren die folgenden Schritte umfasst: das Aufbrechen der verbrauchten Gießereiformen oder Gießereikerne, das Mischen des resultierenden zerkleinerten Materials mit einem partikulären Puzzolan-Additiv sowie das Unterziehen des Gemisches einer Wärmebehandlung bei einer Temperatur im Bereich von 450° bis 900°C.

2. Verfahren nach Anspruch 1, wobei das Puzzolan-Additiv ausgewählt ist aus: Vulkanasche, pulverisierter Brennstoffasche, Flugasche, zerkleinerter granulierter Hochofenschlacke, durch Kondensation abgeschiedenem Silica-Feinpulver, amorphem Silica und calciniertem Bauxit.

3. Verfahren nach Anspruch 1, wobei das Puzzolan-Additiv pulverisierte Brennstoffasche ist.

4. Verfahren nach einem der vorgenannten Ansprüche, wobei das Puzzolan-Additiv eine Partikelgröße hat, die im wesentlichen kleiner als 0,5 mm ist.

5. Verfahren nach einem der vorgenannten Ansprüche, wobei das Puzzolan-Additiv, bezogen auf das Gewicht der Feststoffe, in einer Menge von 0,1% bis 3 Gewichtsprozent vorliegt.

6. Verfahren nach Anspruch 5, wobei das Puzzolan-Additiv, bezogen auf das Gewicht der Feststoffe, in einer Menge von 0,3% bis 1,3 Gewichtsprozent vorliegt.

7. Verfahren nach einem der vorgenannten Ansprüche, wobei das Puzzolan-Additiv dem verbrauchten Gießereisand in Form einer Aufschlämmung mit Wasser zugegeben wird.

8. Verfahren nach Anspruch 7, wobei die Aufschlämmung einen Feststoffgehalt von 20% bis 50 Gewichtsprozent hat.

9. Verfahren nach einem der vorgenannten Ansprüche, wobei die Wärmebehandlung bei einer Temperatur im Bereich von 450° bis 750°C erfolgt.

10. Verfahren nach einem der vorgenannten Ansprüche, wobei das Gemisch einer Wärmebehandlung über eine Dauer von 20 Minuten bis 12 Stunden unterworfen wird.

11. Verfahren nach Anspruch 10, wobei das Gemisch einer Wärmebehandlung über eine Dauer von 30 Minuten bis 2 Stunden unterworfen wird.

12. Verfahren nach einem der vorgenannten Ansprüche, wobei die Wärmebehandlung in einem Wirbelbett ausgeführt wird.

13. Verfahren nach einem der vorgenannten Ansprüche, wobei das Verfahren, während und/oder nach der Wärmebehandlung zusätzlich den Schritt der Entfernung von Staub und/oder Feinanteilen umfasst.

## Revendications

1. Procédé pour la préparation d'une composition réfractaire particulaire pour une utilisation dans la fabrication de moules de fonderie et de noyaux provenant de moules de fonderie ou de noyaux usés, formés d'un matériau réfractaire et d'un liant de résine phénolique durcie par un ester, le procédé comprenant les étapes consistant à réduire en morceaux les moules ou les noyaux de fonderie usés, à mélanger le matériau morcelé résultant avec un additif de pouzzolane particulaire et à soumettre le mélange à un traitement thermique à une température dans l'intervalle de 450 à 900°C.

2. Procédé selon la revendication 1, dans lequel l'additif pouzzolanique est choisi parmi une cendre volcanique, une cendre de combustible pulvérisé, une cendre volante, un laitier de hauts fourneaux granulé broyé, une fumée de silice condensée, une silice amorphe et une bauxite calcinée.

3. Procédé selon la revendication 1, dans lequel l'additif pouzzolanique est une cendre de combustible pulvérisé.

4. Procédé selon l'une quelconque des revendications précédentes, dans lequel l'additif pouzzolanique possède une taille de particules substantiellement inférieure à 0,5 mm.

5. Procédé selon l'une quelconque des revendications précédentes, dans lequel l'additif pouzzolanique est présent dans une quantité de 0,1 à 3% en poids sur la base du poids de solides.

6. Procédé selon la revendication 5, dans lequel l'additif pouzzolanique est présent dans une quantité de 0,3 à 1,3% en poids sur la base du poids de solides.

7. Procédé selon l'une quelconque des revendications précédentes, dans lequel l'additif pouzzolanique est ajouté au sable de fonderie usé sous forme d'une suspension avec de l'eau.

8. Procédé selon la revendication 7, dans lequel la suspension possède une teneur en solides de 20 à 50% en poids.

9. Procédé selon l'une quelconque des revendications précédentes, dans lequel le traitement thermique est à une température dans l'intervalle de 450 à 750°C.

10. Procédé selon l'une quelconque des revendications précédentes, dans lequel le mélange est soumis à un traitement thermique pendant une période de 20 minutes à 12 heures.

11. Procédé selon la revendication 10, dans lequel le mélange est soumis à un traitement thermique pendant une période de 30 minutes à 2 heures.

12. Procédé selon l'une quelconque des revendications précédentes, dans lequel le traitement thermique est effectué dans un lit fluidisé.

13. Procédé selon l'une quelconque des revendications précédentes, qui comprend en outre l'étape de retrait de poussière et/ou de parties fines pendant etlou après le traitement thermique.
